(19) Europäisches Patentamt
European Patent Office
Office européen des brevets

(11) **EP 3 506 208 A1**

(12) **EUROPEAN PATENT APPLICATION**

(43) Date of publication:
**03.07.2019 Bulletin 2019/27**

(51) Int Cl.:
**G06T 11/00** $^{(2006.01)}$       **G03F 3/00** $^{(2006.01)}$
**H04N 1/60** $^{(2006.01)}$

(21) Application number: **17306958.4**

(22) Date of filing: **28.12.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **THOMSON LICENSING**
**92130 Issy les Moulineaux (FR)**

(72) Inventors:
• **HELLIER, Pierre**
  **35576 Cesson-Sévigné (FR)**
• **CHAMARET, Christel**
  **35576 Cesson-Sévigné (FR)**
• **PEREZ, Patrick**
  **35576 Cesson-Sévigné (FR)**

(74) Representative: **Vidon Brevets & Stratégie**
**16B, rue de Jouanet**
**BP 90333**
**35703 Rennes Cedex 7 (FR)**

(54) **METHOD FOR OBTAINING COLOR HOMOGENIZATION DATA, AND CORRESPONDING METHOD FOR COLOR HOMOGENIZING AT LEAST ONE FRAME OF A VISUAL CONTENT, ELECTRONIC DEVICES, ELECTRONIC SYSTEM, COMPUTER READABLE PROGRAM PRODUCTS AND COMPUTER READABLE STORAGE MEDIA**

(57)     The present disclosure relates to a method comprising:
- obtaining a first and a second plurality of color distributions, in a color space, the first and second plurality of color distributions each comprising color distributions for each of a plurality of color channels, of first, respectively second, visual frames acquired with each of a plurality of exposures by a first, respectively second, camera, the first and second visual frames being related to a same scene;
- computing a plurality of color transformations, each of the color transformations being adapted, when applied to a first color distribution of the first plurality of color distributions, for obtaining a matching of the first color distribution with a second color distribution of the second plurality of color distributions, the first and second color distribution corresponding to a same color channel and a same exposure;
- aggregating the computed plurality of color transformations in a final color transformation to be applied to a color of the color space, the final transformation taking into account distances measured in the color space between the color and colors of the first plurality of color distributions.

The present disclosure also relates to the corresponding method for color homogenizing a frame of a visual content, electronic devices, electronic system, computer readable program products and computer readable storage media.

Figure 4

**Description**

**1. Technical field**

The present disclosure relates to the field of color homogenization of at least one visual contents regarding output of an acquiring device (simply called herein after a camera).

A method for obtaining color homogenization data, and corresponding method for color homogenizing a visual content, electronic devices, electronic system, computer readable program products and computer readable storage media are described.

**2. Background art**

Many situations can occur where a same scene is shot with different cameras, located at a same or different position, in view of creating a single movie from shots of both cameras.

For instance, in the technical field of post processing, photographic directors can use cameras of different types for shooting a same scene. Typically, a director can choose a digital camera like a Digital Single Lens Reflex (DSLR) camera, together with a film or silver camera, producing chemical change on crystals of a photographic film, the chemical change being proportional to the light absorbed by the crystals (and thus to an exposure of a lens of the camera). The shots of the two cameras are then merged together.

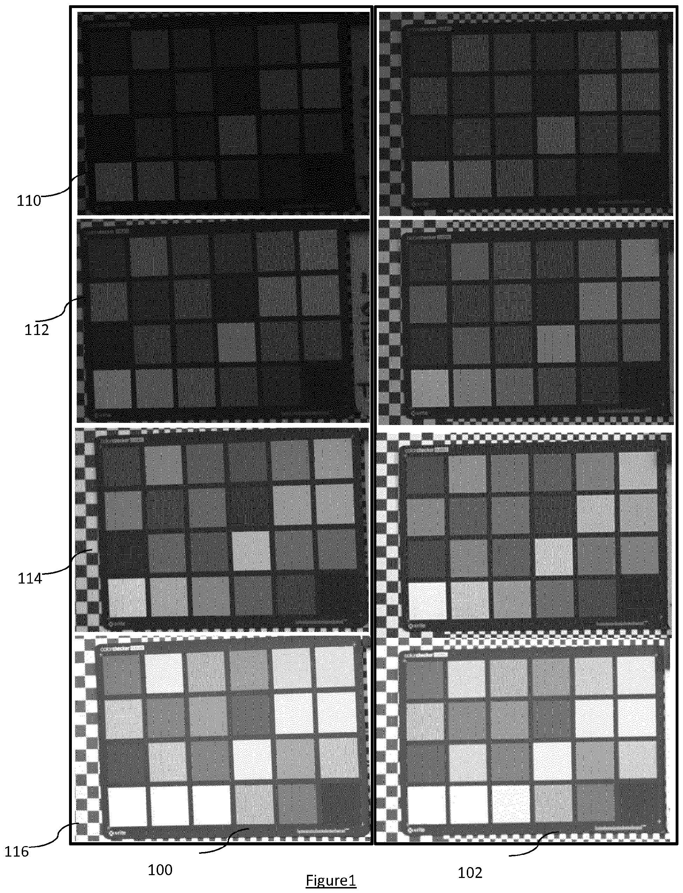

Figure 1 illustrates variation of two cameras responses at different exposures. The left column 100 shows data acquired by a DSLR camera at various exposures while the right column 102 shows images shot by a film camera. Each row 110, 112, 114, 116 corresponds to a specific exposure. As illustrated by figure 1, the responses of the sensor of each camera are so different that the colors of the same scene appear differently.

Thus, in the postproduction pipeline, one issue remains when one wants to merge images acquired by two cameras: how to homogenize the colors of the two acquisitions, before any processing of the merged images (color grading, visual effects, etc.)?

The same issue can also appear in day-to-day life when one wants to merge together shots (acquired by different smart phone or tablets for instance) of a same scene. For instance, one may want to merge shots of a same wedding scene acquired from two different viewpoints by the mobile devices of two different persons.

Solutions for color homogenizing two images of a same exposure has been proposed by some available methods. This problem is referred to as histogram specification, or histogram matching, or color transfer. Some known methods, that can be classified as "Histogram-based methods", search for a transformation that permits to align the tonal or color distributions of both images. Such methods can lead to matching graphical representations (also known as histograms) of those color distributions. Other methods, that can be classified as "Histogram-based methods", assume that there are some structures overlapping in both images. In other words, it is assumed that some similar objects are visible in scenes acquired by both cameras. After registration, a certain number of landmarks provide color correspondences, from which a global, or semi-local, color correction can be computed.

However, as color homogenizations (or in other words color calibrations) need to be performed for several exposures, and to be consistent for all exposures, those method still lead to many iterations. Thus, color calibrations represent a very time-consuming task.

It is of interest to propose techniques that permit enhancing a user experience during a color homogenization compared to some prior art color calibration solutions.

**3. Summary**

The present principles propose a method comprising:

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^c$ of said color transformations being adapted, when applied to a first color distribution $S_i^c$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^C$ in a final color transformation $T(x)$ to be applied to a color $x$ of said color space, said final transformation $T(x)$ taking into account distances measured in said color space between said color $x$ and colors of said first plurality of color distributions.

The method can be performed for instance in an electronic device, like a mobile device.

According to at least one embodiment of the present disclosure, said final transformation T(x) is a weighted linear combination of said color transformations, weights of said color transformations in said linear combination taking into account said measured distances.

According to at least one embodiment of the present disclosure, said aggregating only takes into account the color distributions of said first plurality of distributions being the n-closest color distributions of said point.

According to at least one embodiment of the present disclosure, said aggregating only takes into account the color distributions of said first plurality of distributions being the three closest color distributions of said point.

According to at least one embodiment of the present disclosure, said method comprises, before computing said plurality of color transformations, redistributing color distributions of said first and/or second plurality of color distributions.

According to at least one embodiment of the present disclosure, said redistributing takes account of a color spread of said first and/or second plurality of color distributions, for each of said color channels, and/or a separability of said first and/or second plurality of color distributions regarding said plurality of exposures.

According to at least one embodiment of the present disclosure, said redistributing comprises applying a gamma correction to color distributions of said first and/or second plurality of color distributions.

According to at least one embodiment of the present disclosure, redistributing comprises computing a gamma value to be used by said gamma correction, said gamma value being computed for being a gamma value adapted for maximizing a cost function taking into account a distance between color distributions of said first, respectively second, plurality of color distributions, for two consecutive exposures and a same color channel.

According to at least one embodiment of the present disclosure, said gamma correction uses a gamma value being other than 0.45.

According to at least one embodiment of the present disclosure, said first, respectively second, visual frames are acquired by a same camera, one of said first and/or second visual frames being output by a mirroring unit introducing a spectral shift compared to another of said first and/or second visual frames.

According to at least one embodiment of the present disclosure, said first, respectively second, visual frames are acquired by distinct cameras, a first one of said cameras being a digital camera and a second one of said cameras being a film camera.

According to at least one embodiment of the present disclosure, said first, respectively second, visual frames are acquired by distinct digital cameras.

According to at least one embodiment of the present disclosure, at least one color distribution of said first /and second plurality of color distributions is based on EXR data obtained from a frame of said first, respectively second, visual content.

According to at least one embodiment of the present disclosure, the method comprises applying said final transformation to a third color distribution of a third visual frame acquired by said first camera.

According to another aspect, the present disclosure relates to an electronic device comprising at least one memory and one or several processors configured for:

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^C$ of said color transformations being adapted, when applied to a first color distribution $S_i^C$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^C$ in a final color transformation $T(x)$ to be applied to a color $x$ of said color space, said final transformation $T(x)$ taking into account distances measured in said color space between said color $x$ and colors of said first plurality of color distributions.

While not explicitly described, the electronic device of the present disclosure can be adapted to perform the method of the present disclosure in any of its embodiments.

According to another aspect, the present disclosure relates to an electronic device comprising at least one memory and at least one processing circuitry configured to:

- obtain a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- compute a plurality of color transformations, each $T_i^{c}$ of said color transformations being adapted, when applied to a first color distribution $S_i^{c}$ of said first plurality of color distributions, for obtaining a matching of said first color distribution with a second color distribution of said second plurality of color distributions, said first and second color distribution corresponding to a same color channel and a same exposure;

- aggregate said computed plurality of color transformations $T_i^{c}$ in a final color transformation $T(x)$ to be applied to a color $x$ of said color space, said final transformation $T(x)$ taking into account distances measured in said color space between said color $x$ and colors of said first plurality of color distributions.

While not explicitly described, the electronic device of the present disclosure can be adapted to perform the method of the present disclosure in any of its embodiments.

According to another aspect, the present disclosure relates to an electronic system comprising at least one two electronic devices, at least one first of said electronic devices comprising at least one processor configured for:

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^{c}$ of said color transformations being adapted, when applied to a first color distribution $S_i^{c}$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^{c}$ in a final color transformation $T(x)$ to be applied to a color $x$ of said color space, said final transformation $T(x)$ taking into account distances measured in said color space between said color $x$ and colors of said first plurality of color distributions;

at least one second of said electronic devices comprising at least one processor configured for:

- applying said final transformation to a third color distribution of a third visual frame acquired by said first camera.

According to at least one embodiment of the present disclosure, said at least one processor of said first electronic device is configured for redistributing color distributions of said first plurality of color distributions and said second electronic device is configured for redistributing color distributions of said third color distribution, both redistributing comprising applying a gamma correction based on a gamma value computed by said first electronic device.

While not explicitly described, the communication system of the present disclosure can be adapted to perform at least one of the methods of the present disclosure in any of its embodiments.

While not explicitly described, the present embodiments related to a method or to the corresponding electronic device, electronic assembly or system can be employed in any combination or sub-combination.

According to another aspect, the present disclosure relates to a non-transitory program storage product, readable by a computer.

According to an embodiment of the present disclosure, said non-transitory computer readable program product tangibly embodies a program of instructions executable by a computer to perform at least one of the methods of the present disclosure, in any of its embodiments.

According to at least one embodiment of the present disclosure, said non-transitory computer readable program product comprises program code instructions for performing, when said program product is executed by a computer, a method comprising

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^C$ of said color transformations being adapted, when applied to a first color distribution $S_i^C$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^C$ in a final color transformation $T(x)$ to be applied to a color $x$ of said color space, said final transformation $T(x)$ taking into account distances measured in said color space between said color $x$ and colors of said first plurality of color distributions.

According to another aspect, the present disclosure relates to a non-transitory program storage device, readable by a computer.

According to at least one embodiment of the present disclosure, the present disclosure relates to a non-transitory program storage device carrying a software program comprising program code instructions for performing at least one of the methods of the present disclosure, in any of its embodiments, when said software program is executed by a computer.

Notably, according to at least one embodiment of the present disclosure, said software program comprises program code instructions for performing, when said non-transitory software program is executed by a computer, a method comprising

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^C$ of said color transformations being adapted, when applied to a first color distribution $S_i^C$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^C$ in a final color transformation $T(x)$ to be applied to a color $x$ of said color space, said final transformation $T(x)$ taking into account distances measured in said color space between said color $x$ and colors of said first plurality of color distributions.

According to another aspect, the present disclosure relates to a computer readable storage medium carrying a software program.

According to at least one embodiment of the present disclosure, said software program comprises program code instructions for performing the method of the present disclosure, in any of its embodiments, when said software program is executed by a computer.

Notably, according to at least one embodiment of the present disclosure, said software program comprises program code instructions for performing, when said software program is executed by a computer, a method comprising:

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^C$ of said color transformations being adapted, when applied to a first color distribution $S_i^C$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^C$ in a final color transformation $T(x)$ to be applied to a color $x$ of said color space, said final transformation $T(x)$ taking into account distances measured in said color space between said color $x$ and colors of said first plurality of color distributions.

It is to be understood that a visual content may include visual items, like images, pictures, photos, drawings, frames or groups of pixels from a video, movie or a collection of stills. A visual content may also include other data, for instance audio and/or metadata.

Herein, the term 'coupled' is defined to mean directly connected to or indirectly connected with through one or more intermediate components. Such intermediate components may include both hardware and software based components.

## 4. List of drawings.

The present disclosure can be better understood, and other specific features and advantages can emerge upon reading the following description, the description making reference to the annexed drawings wherein:

- Figure 1 illustrates variation of responses from two cameras at different exposures;
- Figure 2A illustrates distribution of values for a color channel, for a frame of a visual content acquired by a DSLR camera;
- Figure 2B illustrates effect of a too low gamma value on the distribution of values across exposures, for a color channel, for a frame of a visual content acquired by a DSLR camera;
- Figure 2C illustrates distribution of values for a color channel, for a frame of a visual content acquired by a DSLR camera after the optimal gamma correction. distributions are correctly balanced;
- Figure 3 illustrates an exemplary electronic device according to at least one embodiment of the present disclosure;
- Figure 4 illustrates an exemplary embodiment of a method of the present disclosure for obtaining color homogenization data between at least a first and a second training visual contents obtained respectively from a first camera and a second camera (being either a same or differents cameras); and
- Figure 5 illustrates an exemplary embodiment of a method of the present disclosure for color homogenizing a first input visual frame obtained from said first camera by using the color homogenization data obtained by the method illustrated by figure 4.

It is to be noted that the drawings have only an illustration purpose and that the embodiments of the present disclosure are not limited to the illustrated embodiments.

## 5. Detailed description of the embodiments.

The present disclosure relates to a color homogenization between images acquired by at least a first and a second cameras, that is to say the obtaining of data that helps to adjust, in terms of colors of these images, the output of the first camera with the output of the second camera.

More precisely, the present disclosure proposes to compute color correspondences from a set of training visual contents acquired, with multiple exposures, from the first and/or the second cameras in order to obtain a single color transform LUT usable later on any input visual content acquired by the first camera for obtaining a color graded visual content having the color look similar to a color look of a similar content acquired by the second camera. At least some embodiments of the present disclosure can thus help to offer an (at least partially) automatic solution to the problem of color homogenization between images acquired by different cameras.

A visual content can be a still image and/or a video sequence or stream. The first and the second cameras can be distinct cameras. In a variant, the color calibration can relate to the two different paths of a same camera, like a 3D camera, a spectral shift being introduced (thanks to a mirroring unit for instance) in data output by using a first path compared to data output by using a second path. For instance, the first camera can be a DSLR camera and the second camera can be a film camera.

In at least some embodiments, the color correspondence between images can be determined for being valid for a range of exposures, and encoded into the single look-up table (LUT) transformation. A color transform LUT is a color mapping representation, or view, that describes how the colors, represented for instance by a position (or bin) in a color space, are transformed (or, in other words, mapped). Thus, a color transform LUT defines a mapping between a first set colors to a second set of colors. For instance, using a color space known by the one of skill in the art as "Red Green Blue" (RGB) color space, when a user wants to give a color look to an image, he can apply a corresponding color transform LUT on this image so that all the RGB color pixels in this image are mapped to new RGB values as defined in the LUT.

A LUT is usually defined on a unit cube $[0,1]^3$ of a color space, by sampling the unit cube with an arbitrary sampling rate (leading for instance to 17 or 63 samples).

The present disclosure proposes to obtain multiple color transformations for multiple exposures, and to aggregate all transformations into a single one, thus defining a single color transform LUT, that can be applied at every exposure. This first aspect is referred to herein as a training (or definition, or calibration training) phase.

The present disclosure also relates to the applying of the single color transform LUT to a color distribution of colors of a first visual frame acquired by the first camera, for color homogenizing (or color compensating) the first visual frame, in order for the first visual frame, once color compensated, to look like as it has been acquired by the second camera. This second aspect is referred to herein as an applying (or predicting) phase.

The visual contents used as training data (in the training phase) can vary upon embodiments. Notably, in the technical field of post processing of movies, the visual contents used as training data can be specific visual contents, like still images or short video sequences of color checkers (as illustrated by figure 1), acquired specifically for that purpose.

In other embodiments, like embodiments adapted to calibration of shots of a same scene of a real event, some matching visual contents acquired by both cameras with different exposures, like images or video sequences of the scene or event, can be used as training data.

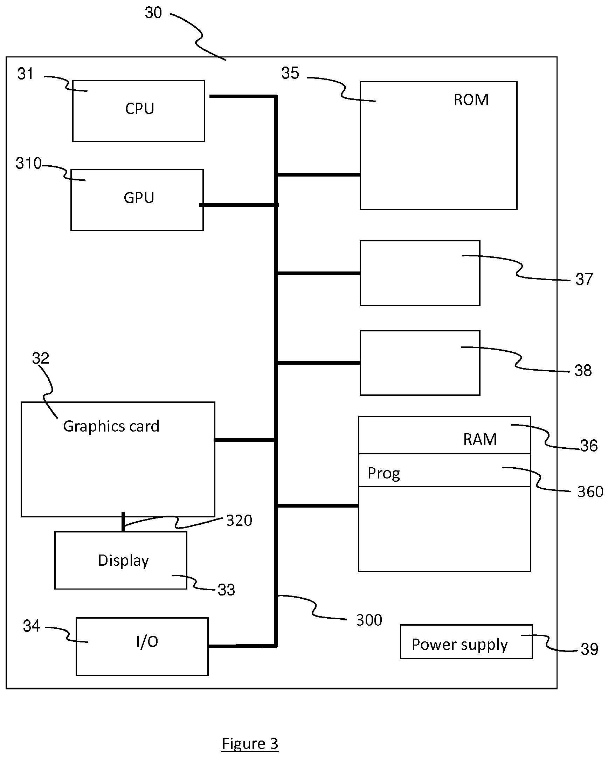

Figure 3 describes the structure of an exemplary electronic device 30 configured notably to perform at least some or all the embodiments of at least one (or all) of the methods of the present disclosure.

It is to be pointed out that the elements, or modules, or blocks, of the functional structure illustrated in figure 3 can be implemented using software components stored in memory and executed by a processor or CPU of the electronic device and/or using hardware components of the electronic device. At least some elements illustrated by figure 3 can comprise both at least one software component and at least one hardware component of the communication device.

The electronic device can be any image and/or video content acquiring device, like a smart phone or a camera. It can also be a device without any video acquiring capabilities but with image and/or video processing capabilities. For instance, in some embodiment, the electronic device can comprise a communication interface, like a receiving interface to receive a visual content (for instance a still image and/or a video sequence), like a visual content acquired by a first and/or a second cameras.

In the exemplary embodiment of figure 3, the electronic device 30 can include different devices, linked together via a data and address bus 300, which can also carry a timer signal. For instance, it can include a micro-processor 31, 310 (or CPU), notably a Graphic Processing Unit (GPU) 310 (Optional), a graphics card 32 (depending on embodiments, such a card may be optional), at least one Input/ Output module 34, (like a keyboard, a mouse, a led, and so on), a ROM (or "Read Only Memory") 35, a RAM (or "Random Access Memory") 36, a power supply 39. According to a variant, the power supply 39 is external to the electronic device 30.

In the exemplary embodiment of figure 3, the electronic device can also comprise at least one communication interface 37 configured for the reception and/or transmission of data, notably image and/or video data, via a wireless coupling (notably of type WIFI® or Bluetooth®), and/or at least one wired communication interface 38. Those communication interface is optional. Indeed, in some embodiments, the electronic device can process visual contents acquired from two different cameras of the device (like a front camera and a rear camera) or visual contents stored in a medium readable by the electronic device.

In some embodiments, the electronic device 30 can also include, or be coupled to, at least one display module 33, for instance a screen, directly coupled to the graphics card 32 by a dedicated bus 320. Such a display module can be used for instance in order to output information, like some first and/or second training visual contents acquired by the first and/or second cameras, or a visual content resulting of the use of the single LUT on the first training visual content.

When a first input visual content, acquired by the first camera, is further to be color homogenized with the single LUT obtained thanks to the training visual contents, the display module can output the first input visual content, or the visual content resulting of the use of the single LUT on the first input visual content.

It is to be noted that in some embodiments, the electronic device can include several display modules. For instance, with the above use case, distinct display modules of the electronic device can be used for rendering the first training visual content, the second training visual content, the first input visual content, the color graded first training and/or input visual content.

In the illustrated embodiment, the electronic device 30 can communicate with another device (like a server or at least one of the first and/or second camera) or with at least one display module thanks to a wireless interface 37.

Each of the mentioned memories can include at least one register, that is to say a memory zone of low capacity (a few binary data) or a memory zone of high capacity (with a capability of storage of an entire audio and/or video file notably).

When the electronic device 30 is powered on, the microprocessor 31 loads the program instructions 360 in a register of the RAM 36, notably the program instruction needed for performing at least one embodiment of at least one or all the methods described herein, and executes the program instructions.

According to a variant, the electronic device 30 includes several microprocessors.

In the exemplary embodiment illustrated in figure 3, the microprocessor 31 can be configured for:

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^c$ of said color transformations being adapted, when applied to a first color distribution $S_i^c$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^c$ in a final color transformation $T(x)$ to be applied to a color $x$ of said color space, said final transformation $T(x)$ taking into account distances measured in said color space between said color $x$ and colors of said first plurality of color distributions.

In the exemplary embodiment illustrated in figure 3, the microprocessor 31 can be configured for applying said final transformation to a third color distribution of a third visual frame acquired by said first camera.

In some other embodiments, instead of obtaining the first and second pluralities of color distributions, computing a plurality of color transformations, and aggregating the plurality of color transformations in a final transformation, the microprocessor 31 can be configured for receiving the final transformation (and /or the corresponding single LUT) from a communication interface 37, 38 or for obtaining said final transformation from a storage medium.

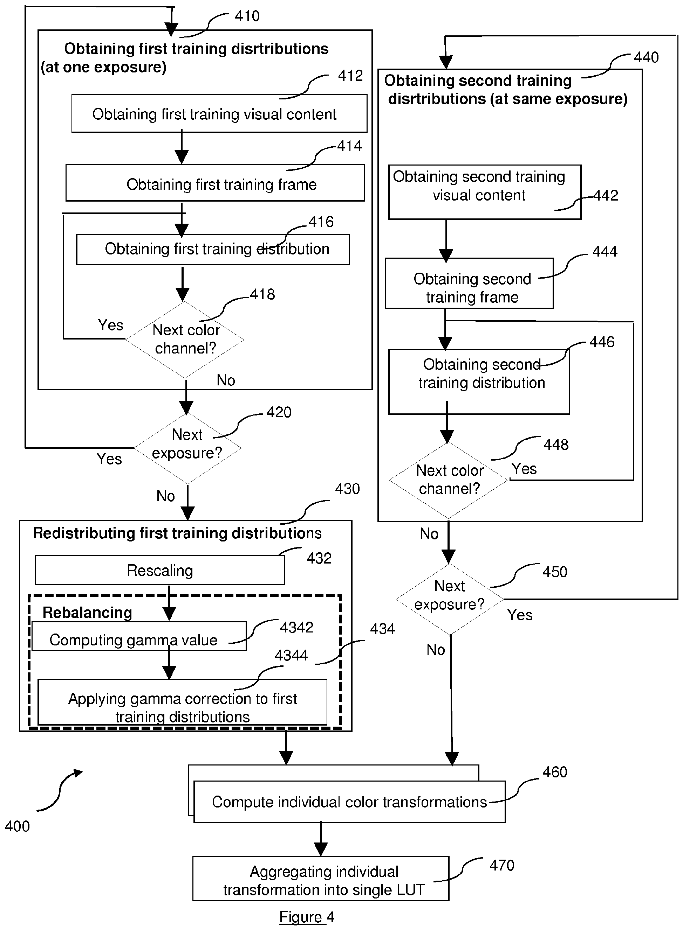

Figure 4 illustrates a flowchart of an exemplary method 400 of obtaining color homogenization data from training visual contents acquired from at least two cameras, according to the present principles. The method can be implemented for instance in the electronic device 30 of figure 3.

One of the goal of the method of present disclosure, in at least some embodiment, is to compute a single color transform LUT, encoding a colorimetric transformation from data acquired by a first one of the cameras to data acquired by a second one of the cameras, such that when applied to arbitrary exposure data issued from the first camera, the color correction applied to the data by the colorimetric transformation represented by the color transform LUT remains valid (or in other word give to the data issued from the first camera the color look of data issued from the second camera).

According to the exemplary embodiment detailed hereinafter, in a high-level perspective, the method can comprise computing pre-LUT and adaptive gamma correction, computing all individual color corrections and aggregating computed individual color corrections.

More precisely, in the illustrated embodiment, the method 400 comprises obtaining 410 first training color distributions from at least one first training visual content acquired at first exposures and obtaining 440 second training color distributions from at least one second training visual content acquired at same exposures as the first exposures used for obtaining the first training color distributions.

In the exemplary embodiment illustrated, obtaining 410, 440 first (respectively second) training color distributions can comprise notably obtaining 412, 442 at least one first (respectively second) training visual content. Depending upon embodiments, the first (respectively second) training visual content may have been previously acquired, either locally (for instance by some image and/or video acquiring means, like a camera or a web cam, of the electronic device illustrated by figure 3), or remotely. Thus, in some embodiments, the obtaining 412, 442 of the at least one first (respectively second) training visual content can comprise reading of local storage medium, like a memory of the electronic device 30 in which the method is implemented or a removable storage unit (like a USB key, a compact disk, and so on). In other embodiments, the at least one first (respectively second) training visual content can be obtained, via a communication interface of the electronic device 30, from a remote device.

In some embodiments, like in the illustrated embodiment, the obtaining 412, 442 of the first (respectively second) training visual content can be performed by interacting with a user, the selection of the first (respectively second) training visual content being acquired from a user interface (like a touchscreen, a mouse, a keyboard...). For instance, the obtaining 412, 442 of the first (respectively second) training visual content can comprise acquiring a name, a version, a format and/or a location of a first (respectively second) training visual content.

According to some embodiments, notably when a first (respectively second) training visual content is a video sequence, thus comprising several frames, the method can also comprise obtaining 414, 444 a first (respectively second) training frame from the obtained first (respectively second) training visual content. This can be performed similarly to the obtaining of a first (respectively second) training visual content, by interacting with a user or at least partially, automatically.

In some other embodiments, the selection of at least first (respectively second) training visual contents and/or training frames can be performed automatically, with or without requesting confirmation from a user (for instance by reading information from a descriptive file).

In some embodiments, the obtaining 412, 442 of a first (respectively second) training visual content and the obtaining 414, 444 of a first (respectively second) training frame from the first (respectively second) training visual content can be mixed. Indeed, when the first (respectively second) training visual content only comprises a unique image, as it is the case for instance when a visual content is a still image, the obtaining of the first (respectively second) training visual content also implies the obtaining of the first (respectively second) training frame itself.

Of course, the exemplary embodiments described herein are only presented as exemplary use cases and the principles of the present disclosure can also apply to many different use cases. Dependent upon embodiments, for instance, first (respectively second) training visual contents can be of a same type (for instance a still image or a video sequence) or of different (types (for instance a mix of still images and video sequences).

According to figure 4, the method can also comprise obtaining 416, 446 a first (respectively second) training distribution, being a set of values representing the distribution of colors, for a color channel, inside the first, respectively second, training frame. Each value corresponds to a point, or element, of a color space (for instance a Red Blue Green (RBG) color space, or a color space relating to Luminance and to Chrominance components A and B (also known as CIE L*A*B or CIELAB color space) of the French commission "Commission Internationale de l'Eclairage" (CIE).

In the case of a first, respectively second, camera being of DSLR type, the values of the first, respectively second, training color distribution can for instance be obtained by reading data files, notably data files having a high dynamic range (HDR) file format, like data files compliant with the standard OpenEXR developed by Industrial Light & Magic (ILM) and adapted for computer imaging applications. Such data files can notably contain data in a floating point linear representation. The present disclosure sometimes referred more simply to such files as "EXR files"

In the case of a first, respectively second, camera being a film camera, the values of the first, respectively second, training color distribution can be obtained by different techniques, for instance technics based on histogram matching, interest points, and/or color transfer.

The obtaining 416, 446 of first (respectively second) training color distribution for a color channel can be performed iteratively, for each color channel (418, 448).

The obtaining 410,440 of first (respectively second) training color distributions (for all color channels) can further be performed iteratively, for multiple exposures (420, 450).

In the illustrated embodiment of figure 4, once first training color distributions have been obtained for each color channel (418) and for multiple exposures (420), the method can comprise preprocessing, or in other words "reshaping" or "redistributing", 430 the obtained first training color distributions.

Notably, as the final color transform LUT (obtained later by aggregating all transformations) is to be applied to colors within the unit cube $[0,1]^3$ of the color space, color data being also in the range [0,1] are needed. Thus, for some first training color distributions, the preprocessing can comprise a rescaling 432, for instance a linear rescaling, of at least some of the first training color distributions for constraining the values to the range [0,1].

In the detailed embodiment, a rescaling 432 is performed on all the first input color distributions obtained (for all color channels and with the multiple exposures) from the first camera. Thus, all values of the rescaled first training color distributions are assumed hereinafter to belong to the range [0,1].

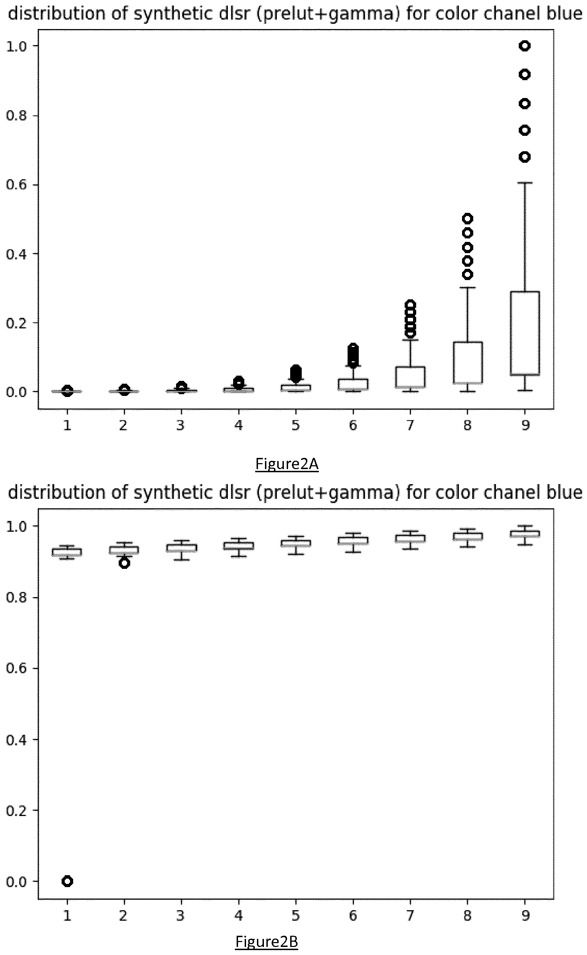

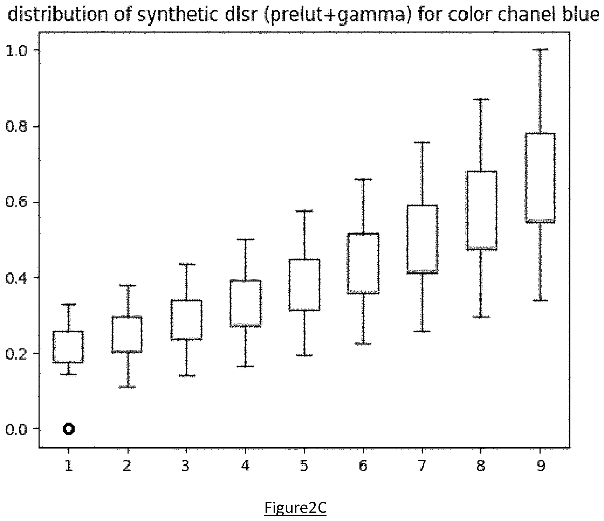

A redistributing can further be needed for instance because of a strongly unbalanced color data spread over exposures. Figure 2A illustrates an exemplary distribution of values, for an exemplary color channel (being in the exemplary use case of figure 2 a blue channel), for a color distribution of multiple exposure images output by a DLSR camera. The color data distribution for 9 images taken with different exposures (illustrated by exposure levels increasing from 1 (for low exposure) to 9 (for high exposure) on the figure) is represented as boxplots. As shown by figure 2A, at low exposures, the color data distribution output by the camera is within a tiny interval, while color data distribution at high exposure occupies a much larger range. This unbalanced distribution can lead to a severe issue if used directly, for instance, for defining a color transform LUT. Indeed, because of the tiny interval of color data at low exposure, a large number of bins will be needed to be used to a LUT, for the LUT to be accurate at low exposure. For example, up to 512 bins for each color channel can be needed for the distribution as output by the camera, leading to a $512^3$ color transform LUT, which would not fit in memory.

As a conclusion, the unbalanced occupation of bins within the color distribution can lead to a number of sampling points for defining the color transform LUT insanely large and thus to an unreasonable LUT resolution. Thus, in some embodiment, the redistributing 430 can comprise rebalancing 434 the scaled first training color data distributions in order to obtain a more balanced plurality of color distributions, for all exposures, before applying a color transform LUT.

For instance, as in the illustrated embodiment, the rebalancing 434 of color distributions can comprise applying 4344 a correction of "gamma" type (or "gamma correction") to the color distributions of the scaled first training color distributions. A gamma correction can be described by an output value y, with $y = x^\gamma$, $\gamma$ being a positive real numeric value, for an input value *x* of a color distribution. Such a gamma correction can permit to obtain, for a low exposure distribution, more sampled values than the number of values that would have been obtained by sampling directly (and linearly) the color distribution.

Impact of extremal gamma values is detailed hereinafter in an exemplary purpose. A high gamma value (like $\gamma = 1$) can lead to the unbalanced distribution output by the camera, as already discussed in link Figure 2A. A very low gamma value close to zero (like $\gamma \ll 1$) can lead to non-separable color distributions. Figure 2B illustrates effect of a too low gamma value on a training color distribution of values for a color channel. As shown in Figure 2B, the color distribution of values across exposures can be not separable enough.

Thus, in some embodiments, as in the embodiment of figure 4, the method can comprise computing 4342 an optimal gamma value to be used when applying the gamma correction.

Such an optimal gamma value can be obtained (or computed) by quantifying a quality of a given $\gamma$ value. This quality should obey to at least some constraints. A first constraint can relate to a color spread of at least one color distribution after gamma correction. This color spread, that can be measured by the variance of the corresponding color distribution for instance, is related to the accuracy of a color transform LUT for the processed color distribution. For instance, a first constraint can be that the color spread of each color distribution should be maximal.

A second constraint can relate to the separability between color distributions. Indeed, as a further step of the method can comprise aggregating all color transformations into one single color transform LUT, it is better to have each first training color distribution being well separated from the others first training color distributions. Thus, a second constraint can be to maximize the separation between the first training color distributions.

Let us note:

- $D_i^c$ a training color distribution (as for instance a floating distribution obtained by reading EXR files of a camera), for a color channel c, and for an exposure level $i \in [1,n]$; and

- $(D_i^c)^\gamma = \{x^\gamma, x \in D_i^c\}$ the same color distribution after its processing by a gamma correction.

With this notation, the method can comprises estimating the gamma correction that maximizes the following cost function:

$$\hat{\gamma} = argmax\ C(\gamma) = argmax\left(\min_{i,c}(std(D_i^c)^\gamma)) + \min_{i,c} d((D_{i+1}^c)^\gamma, (D_i^c)^\gamma)\right)$$

where $d((D_{i+1}^c)^\gamma, (D_i^c)^\gamma)$ is the distance between the color distributions obtained after applying a gamma correction to two first training color distributions, for a same color channel, and for two consecutive exposure levels.

In some embodiments, to speed up the computation, and under a Gaussian hypothesis, the distance can for instance be computed as the Mahalanobis distance between two color distributions:

$$p,q : d(p,q) \triangleq \frac{1}{4}\ln\left(\frac{1}{4}\left(\frac{\sigma_p^2}{\sigma_q^2} + \frac{\sigma_q^2}{\sigma_p^2} + 2\right)\right) + \frac{1}{4}\left(\frac{(\mu_p - \mu_q)^2}{\sigma_p^2 + \sigma_q^2}\right)$$

Depending upon embodiments, different types of cost function and/or different distances can be used. For exemple, some embodiments can rely on a cost function with linear weighting between the two terms and/or a Kullback distance or an Optimal transport distance.

The first term of the cost function ensures that the spread of each first training color distribution is maximal, while the second term ensures that first training color distributions with consecutive exposure levels are well separated.

Depending upon embodiments, different optimizers can be used for optimizing the cost function. For instance, in the detailed embodiment, the optimizer used for optimizing the cost function can be a simplex, that leads from instance, when implemented on some real data, to an optimal value: $\gamma = 0.251$, different from the "classical" 0.45 value used for some prior art solutions for linear EXR images.

An exemplary redistributed first training color distribution, obtained after applying the gamma correction with an optimal gamma value, on the first color training distributions of figure 2B, is plotted on Figure 2C and shows that the first training color distributions are correctly rebalanced. Indeed, in at least some of its embodiments, the method of the present disclosure, by computing the optimal gamma transformation, can help obtaining a color transform LUT being accurate and/or moderate in terms of memory footprint for its definition.

The redistributed can result in a single "pre-LUT", or in other words an encoded function, adapted to be applied to a color distribution of a frame or a visual content obtained from the first camera. Such a single pre-LUT" can be expressed for instance in a Cinespace (CSP) format for a first training frame being a EXR image and permits to obtain, from a color distribution of a frame output from the first camera, a "redistributed" color distribution resulting from the rescaling and the rebalancing of this color distribution.

The rescaling and the rebalancing are presented as two separate steps in the exemplary embodiments of figure 4, for ease of explanations. However, it Is to be understood that the rescaling and the rebalancing can be performed concurrently in a single step (by applying the pre-LUT introduced above for instance).

As illustrated by figure 4, the method can further comprise computing 460 an "individual" color transformation, to be applied to the redistributed first training color distribution, for each color channel and each exposure level.

With notation introduced above, let us note:

- $S_i^c = (D_i^c)^{\widehat{\gamma}}$ the redistributed (or reshaped) first training color distribution, after optimal gamma correction;

- $E_i^c$ the second training color distribution (acquired from the second camera); and

- $T_i^c$ the transformation that maps the redistributed (or reshaped) first training color distribution $S_i^c$ towards the second training color distribution $E_i^c$.

The color transformation $T_i^c$ is thus intended to result, when applied to the redistributed (or reshaped) first training color distribution, in a color distribution $T_i^c(S_i^c)$ close to the second training color distribution $E_i^c$. Then, it means that $T_i^c$ can be obtained such that $E_i^c = T_i^c(S_i^c)$.

The color transformation $T_i^c$ can be obtained by different matching techniques, like the histogram matching technique, or the optimal transportation matching technique.

In the illustrated embodiment, the method 400 can comprise aggregating 470 all computed color transformations $T_i^c$ in a single ("aggregating") color transformation for defining a single color transform LUT. As explained above, a LUT is a sampling of the unit cube $[0,1]^3$ with an arbitrary sampling rate (typically 17 or 63), that describes a matching between the sampled points and points representing colors in a color space, and thus a color transformation to be applied to each point $x$ of the unit cube .

This single color transformation, resulting from the aggregating, is called herein "final" color transformation (even if of course, it is not excluded that, in some embodiments, a further color transformation can be applied later to a point of the color space).

According to at least one embodiment, the final color transformation applied to a color point x can be defined by taking into account a distance between the color point *x* and at least one of the redistributed (or reshaped) first training color distributions $S_i$.

Notably, in the illustrated embodiments, the final color transformation *T(x)*, aggregating all "individually" computed color transformations $T_i^c$, and defining the single color transform LUT, can be defined as *T(x)* such that:

$$\forall x \in [0,1]^3, T(x) = \frac{\sum_i D(x, S_i) * T_i(x)}{\sum_i D(x, S_i)}$$

Where *D(x,$S_i$)* is a distance between the color point *x* and the redistributed first training color distribution $S_i$ of exposure *i*.

This distance *D(x,$S_i$)* can be formulated, under a Gaussian hypothesis, as:

$$D(x, S_i) = \frac{1}{(2\pi)^{\frac{3}{2}}|\Sigma_i|^{\frac{1}{2}}} e^{-\frac{1}{2}(x-\mu_i)^T \Sigma_i^{-1}(x-\mu_i)}.$$

with:

$\mu_i$ being the mean value of the color distribution $S_i$;
$(x - \mu_i)^T$ the transposed vector of the vector $(x - \mu_i)$; and
$\Sigma_i$ being the co-variance matrix of the color distribution $S_i$

In a variant, only some of the first training color distributions are taken into account to compute the final color transformation. For instance, in some embodiments, only the k-most probable first training color distributions can be kept for the linear mixing in the equation above for computing the final color transformation (with k being a strictly positive integer value). Those k-most probable first training distributions can correspond for instance to the k-lowest distances $D(x,S_i)$.

The integer value of "k" can vary depending upon embodiments, Notably, it can be set to 1, 2, 3, 4 or 5.

Of course, depending upon embodiments, a distance from a given point of the color space with a color distribution can be evaluated differently. For instance, in the illustrated embodiment, it can be formulated under a Gaussian hypothesis, as explained above, while in some other embodiment, it can be evaluated as a distance between the given point and a point of the color space representing the mean value of the color distribution, or as a distance between the given point and the point of the color distribution being the closest point with the given point. In some embodiments, formulating a distance using a Gaussian hypothesis can avoid to take into account some isolated or deviant color of a color distribution.

As the method for obtaining homogenization data, in at least some of its embodiments, can take into account training frames acquired with many exposures, it can permit to obtain a single color transform LUT $T(x)$, being valid for multiple exposures (for instance for all exposures used for building a video stream), instead of the multiple color transform LUTs $T_i^c$ used by some solutions of the prior art that are only valid for one single exposure.

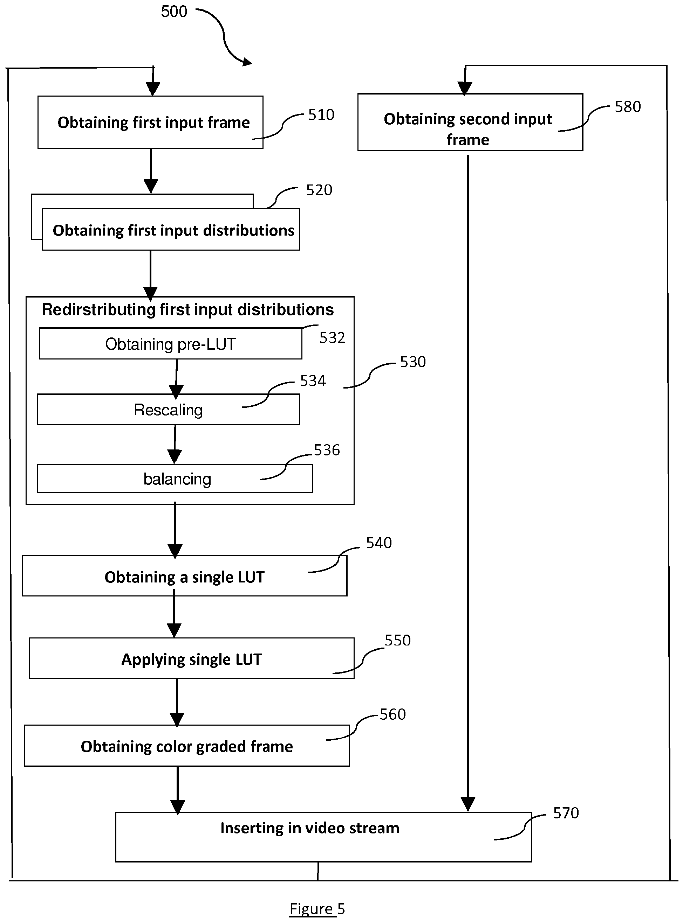

Figure 5 illustrates an exemplary embodiment of a method for color homogenizing of colors of at least one input visual frame obtained from the first camera, relatively to colors that would have been output by using the second camera, by using the training (or calibration) data (notably the single color transform LUT) obtained above, thanks to an embodiment of the method illustrated by figure 4.

According to the exemplary embodiment detailed hereinafter, the method 500 for homogenizing frames comprises obtaining 510 at least one first input frame from a first input visual content acquired by the first camera with one or several exposures, and obtaining 520 first input distributions representing the distribution of colors, for each color channel, inside the first input frame.

The method can comprise redistributing 530 the first input color distributions before applying the single color transform LUT. Similarly to what already have been detailed in link with figure 4, the redistributing 530 can comprise a rescaling 534, for instance a linear rescaling, of at least some of the first input distributions for constraining the values to the range [0,1] and rebalancing 536 the first input color distributions, by applying a gamma correction. However, at the difference of the rebalancing 430 performed on training frames, as illustrated by figure 4, the balancing 534 performed on the first input color distributions, comprises obtaining 532 a pre-LUT to be used in the redistributing for rescaling and rebalancing the first input distribution. The obtained pre-LUT can notably be the pre-LUT defined in the method of figure 4 for redistributing the color distributions of the training frames. The pre-LUT can be obtained from a storage medium accessible from the electronic device implementing the method of figure 5 and from a communication interface of the electronic device implementing the method of figure 5.

According to the illustrated embodiment, the method 500 can also comprise obtaining 540 a single LUT (for instance the single LUT output by the method of figure 4) and applying 550 the obtained single LUT to the first input color distribution. The single LUT can be obtained from a storage medium accessible from the electronic device implementing the method of figure 5 and from a communication interface of the electronic device implementing the method of figure 5.

Optionally, as in the exemplary embodiment of figure 5, the method can also comprise obtaining 560 a color graded frame being the result of the color grading of the first frame according the single LUT and inserting 570, in a video stream, for instance a video stream comprising a second input frame acquired by the second camera (and obtained 580 previously). Notably, some images issues from the first camera can be intercalated between images issues from the second camera.

In some embodiments, the method can also comprise, before applying the single LUT, converting the format of the single LUT to at least one other format, like a format compatible with existing tools, such as Lustre © or Resolve © tools.

A skilled artisan will appreciate that other functionalities not described in the present disclosure may be added to at least one of the described methods in order to improve the quality of the end product.

The present disclosure has been detailed with a 3D LUT color transforms. Of course, the solution of the present disclosure can also be used in link with a 1 D LUT (for instance a contrast mapping for luminance transfer), or a combination of at least two of above transformations.

The method of figure 4 and 5 have been described separately. Of course, in some embodiments, both methods can be implemented sequentially, in the training and prediction phases, respectively, of a same software program for instance. In other embodiments, both methods can be implemented independently. Notably, they can be implemented in different software programs of a same electronic device or in different electronic devices.

As can be appreciated by one skilled in the art, aspects of the present principles can be embodied as a system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor is explicitly shown.

## Claims

1. A method implemented in an electronic device, the method comprising:

   - obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

   - computing a plurality of color transformations, each $T_i^c$ of said color transformations being adapted, when applied to a first color distribution $S_i^c$ of said first plurality of color distributions, for obtaining a matching of said first color distribution with a second color distribution of said second plurality of color distributions, said first and second color distribution corresponding to a same color channel and a same exposure;

   - aggregating said computed plurality of color transformations $T_i^c$ in a final color transformation $T(x)$ to be applied to a color $x$ of said color space, said final transformation $T(x)$ taking into account distances measured in said color space between said color $x$ and colors of said first plurality of color distributions.

2. The method of claim 1 wherein said final transformation $T(x)$ is a weighted linear combination of said color transformations, weights of said color transformations in said linear combination taking into account said measured distances.

3. The method of claim 1 or 2 wherein said method comprises, before computing said plurality of color transformations, redistributing color distributions of said first and/or second plurality of color distributions.

4. The method of claim 3 wherein said redistributing takes account of a color spread of said first and/or second plurality of color distributions, for each of said color channels, and/or a separability of said first and/or second plurality of color distributions regarding said plurality of exposures.

5. The method of claim 3 or 4 wherein said redistributing comprises applying a gamma correction to color distributions of said first and/or second plurality of color distributions.

6. The method of claim 5 wherein said redistributing comprises computing a gamma value to be used by said gamma correction, said gamma value being computed for being a gamma value adapted for maximizing a cost function taking into account a distance between color distributions of said first, respectively second, plurality of color distributions, for two consecutive exposures and a same color channel.

7. The method of any of claims 1 to 6 wherein said first, respectively second, visual frames are acquired by a same camera, one of said first and/or second visual frames being output by a mirroring unit introducing a spectral shift compared to another of said first and/or second visual frames.

8. The method of any of claims 1 to 7 wherein said first, respectively second, visual frames are acquired by distinct cameras, a first one of said cameras being a digital camera and a second one of said cameras being a film camera.

9. The method of any of claims 1 to 8 wherein said first, respectively second, visual frames are acquired by distinct digital cameras.

10. The method of any of claims 1 to 9 comprising applying said final transformation to a third color distribution of a third visual frame acquired by said first camera.

11. An electronic device comprising at least one processor configured for:

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^c$ of said color transformations being adapted, when applied to a first color distribution $S_i^c$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^c$ in a final color transformation $T(x)$ to be applied to a color $x$ of said color space, said final transformation $T(x)$ taking into account distances measured in said color space between said color $x$ and colors of said first plurality of color distributions.

12. An electronic system comprising at least one two electronic devices, at least one first of said electronic devices comprising at least one processor configured for:

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^c$ of said color transformations being adapted, when applied to a first color distribution $S_i^c$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^c$ in a final color transformation $T(x)$ to be applied to a color $x$ of said color space, said final transformation $T(x)$ taking into account distances measured in said color space between said color $x$ and colors of said first plurality of color distributions;

at least one second of said electronic devices comprising at least one processor configured for:

applying said final transformation to a third color distribution of a third visual frame acquired by said first camera.

**13.** The electronic system of claim 12 wherein said at least one processor of said first electronic device is configured for redistributing color distributions of said first plurality of color distributions and said second electronic device is configured for redistributing color distributions of said third color distribution, both redistributing comprising applying a gamma correction based on a gamma value computed by said first electronic device.

**14.** A computer program product comprising program code instructions for executing, when said program is executed by a computer, a method comprising

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^C$ of said color transformations being adapted, when applied to a first color distribution $S_i^C$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^C$ in a final color transformation $T(x)$ to be applied to a color $x$ of said color space, said final transformation $T(x)$ taking into account distances measured in said color space between said color $x$ and colors of said first plurality of color distributions.

**15.** A computer-readable storage medium on which is saved a computer program comprising program code instructions for executing, when said program is executed by a computer, a method comprising:

- obtaining a first and a second plurality of color distributions, in a color space, said first and second plurality of color distributions each comprising color distributions for each of a plurality of color channels, of first, respectively second, visual frames acquired with each of a plurality of exposures by a first, respectively second, camera, said first and second visual frames being related to a same scene;

- computing a plurality of color transformations, each $T_i^C$ of said color transformations being adapted, when applied to a first color distribution $S_i^C$ of said first plurality of color distributions, for obtaining a matching of said first color distribution with a second color distribution of said second plurality of color distributions, said first and second color distribution corresponding to a same color channel and a same exposure;

- aggregating said computed plurality of color transformations $T_i^C$ in a final color transformation $T(x)$ to be applied to a color $x$ of said color space, said final transformation $T(x)$ taking into account distances measured in said color space between said color $x$ and colors of said first plurality of color distributions.

110

112

114

116

100                                                    102

Figure1

distribution of synthetic dlsr (prelut+gamma) for color chanel blue

Figure2A

distribution of synthetic dlsr (prelut+gamma) for color chanel blue

Figure2B

distribution of synthetic dlsr (prelut+gamma) for color chanel blue

Figure2C

30

31

CPU

310

GPU

35

ROM

37

38

32

Graphics card

RAM 36

Prog 360

320

Display

33

300

34

I/O

Power supply 39

Figure 3

Figure 4

Figure 5

Europäisches
Patentamt

European
Patent Office

Office européen
des brevets

**EUROPEAN SEARCH REPORT**

Application Number

EP 17 30 6958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RANG NGUYEN HO MAN ET AL: "Raw-to-Raw: Mapping between Image Sensor Color Responses", 2014 IEEE CONFERENCE ON COMPUTER VISION AND PATTERN RECOGNITION, IEEE, 23 June 2014 (2014-06-23), pages 3398-3405, XP032649558, DOI: 10.1109/CVPR.2014.434 [retrieved on 2014-09-24] | 1-5,7-15 | INV. G06T11/00 G03F3/00 H04N1/60 |
| A | * abstract * * Subsection Contribution; page 1, right-hand column * * Subsection Preliminaries; page 2 * * Section 3.1. Mapping methods; page 2, right-hand column - page 3, left-hand column * * Section 3.2. Global versus illumination-specific; page 3 * * Section 4. Proposed illumination-independent method; page 4 * * figures 1,2 * | 6 | |

-----

-/--

TECHNICAL FIELDS SEARCHED (IPC)

G06T
G03F
H04N

The present search report has been drawn up for all claims

| Place of search | Date of completion of the search | Examiner |
|---|---|---|
| Munich | 19 April 2018 | Rusu, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 17 30 6958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Raquel Gil Rodríguez ET AL: "Color-matching Shots from Different Cameras Having Unknown Gamma or Logarithmic Encoding Curves", 23 October 2017 (2017-10-23), pages 1-16, XP055468386, Retrieved from the Internet: URL:http://ip4ec.upf.edu/system/files/publ ications/SMPTE2017_GilRaquel.pdf [retrieved on 2018-04-18] * abstract * * Section Related Work; page 3 - page 4 * * Section Color-matching: three cases; page 6 - page 7 * ----- | 1-15 | |
| A | WO 2015/086530 A1 (THOMSON LICENSING [FR]) 18 June 2015 (2015-06-18) * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 19 April 2018 | Rusu, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 506 208 A1

## ANNEX TO THE EUROPEAN SEARCH REPORT
## ON EUROPEAN PATENT APPLICATION NO.

EP 17 30 6958

19-04-2018

| Patent document cited in search report | Publication date | Patent family member(s) | Publication date |
|---|---|---|---|
| WO 2015086530 A1 | 18-06-2015 | EP 3080978 A1 | 19-10-2016 |
| | | US 2016323563 A1 | 03-11-2016 |
| | | WO 2015086530 A1 | 18-06-2015 |

EPO FORM P0459